# DEMANDE DE BREVET EUROPEEN

(11) **EP 3 640 452 A1**
(43) Date de publication de la demande: **22.04.2020**
(21) Numéro de dépôt: 19203188.8
(22) Date de dépôt: 15.10.2019
(51) Int. Cl.: F02C 7/045

(54) **PARTIE ANTÉRIEURE DE NACELLE DE GROUPE PROPULSIF D'AÉRONEF COMPORTANT UNE VOIE PRINCIPALE DE PROPAGATION D'EFFORTS ENTRE UNE LÈVRE D'ENTRÉE D'AIR ET UNE PEAU ARRIÈRE D'UN PANNEAU ACOUSTIQUE**

(30) Priorité: 18.10.2018 FR 1859626
(71) Demandeur: Airbus Operations, 31060 Toulouse (FR)
(72) Inventeur: PORTE, Alain, 31770 COLOMIERS (FR); LALANE, Jacques, 31650 SAINT ORENS DE GAMEVILLE (FR); SENTIER, Julien, 31770 COLOMIERS (FR)
(74) Mandataire: Santarelli

(57) **Abrégé**

L'invention porte sur une partie antérieure de nacelle de groupe propulsif d'aéronef, comportant une lèvre d'entrée d'air (1), un panneau acoustique (3), et une liaison rigide entre le panneau acoustique (3) et la lèvre d'entrée d'air (1). Le panneau acoustique présente une surface résistive (31) et une peau arrière (34), et la liaison rigide est formée entre la lèvre d'entrée d'air (1) et la peau arrière (34) du panneau acoustique (3) de sorte à former une voie de propagation d'efforts entre ladite lèvre d'entrée d'air et ladite peau arrière (34).

Cette configuration libère des contraintes de conception ce qui permet d'augmenter la zone (C) de traitement acoustique vers l'avant de la nacelle.

L'invention porte également sur un groupe propulsif d'aéronef comportant une nacelle ayant une telle partie antérieure.

## Description

La présente invention concerne les ensembles propulsifs d'aéronef et plus particulièrement les nacelles des ensembles propulsifs d'aéronef.

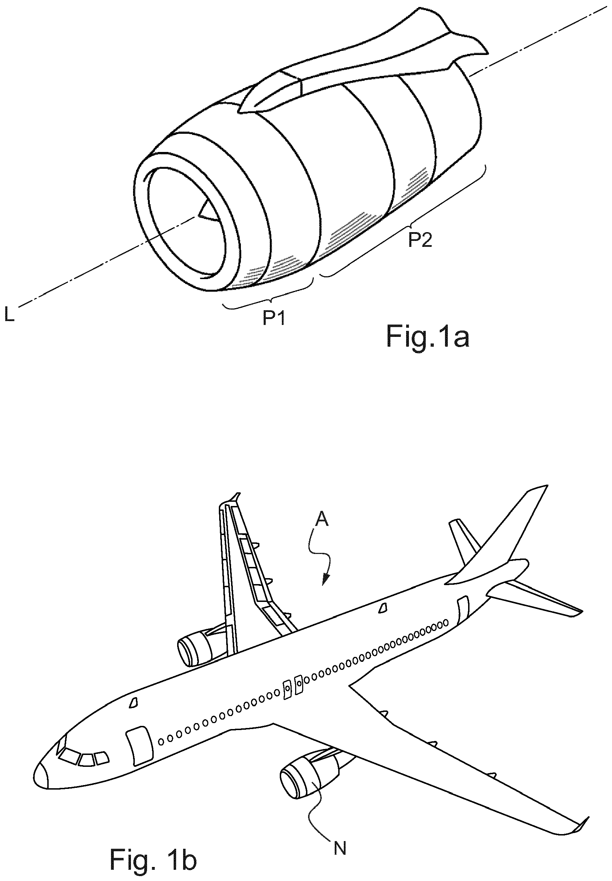

Un ensemble propulsif est un dispositif permettant de générer une poussée, qui constitue la force motrice de l'aéronef équipé de l'ensemble propulsif. Un ensemble propulsif d'aéronef est représenté à titre d'exemple à la figure 1a.

Un exemple d'implantation classique d'une nacelle N d'un ensemble propulsif sur un aéronef A est représenté à la figure 1b.

La nacelle comporte classiquement une partie antérieure P1 formant entrée d'air. La partie antérieure P1 a pour rôle de capter l'air de façon à assurer un écoulement régulier vers la soufflante. La nacelle comporte par ailleurs une partie principale P2, constituant le reste de ladite nacelle.

L'ensemble propulsif s'étend autour d'un axe appelé par la suite axe longitudinal L.

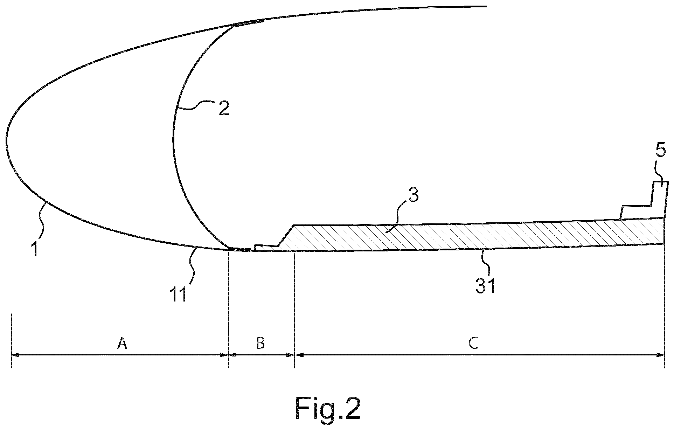

Une structure classique de partie antérieure P1 de nacelle d'ensemble propulsif d'aéronef, telle que connue dans l'état de la technique, est décrite en référence à la figure 2.

La partie antérieure P1 de la nacelle comprend une lèvre d'entrée d'air 1, pouvant être annulaire ou sensiblement annulaire et qui est disposée à son extrémité avant.

Dans l'ensemble du présent document, les notions d'« avant » et d'« arrière », d'« antérieur » et de « postérieur » ainsi que d'« amont » et d'« aval » se comprennent selon la direction du flux d'air dans l'ensemble propulsif. Ainsi, l'air rentre par l'avant de l'ensemble propulsif, c'est-à-dire par la partie antérieure P1 de la nacelle et ressort (après qu'une partie de l'air a servi en tant que comburant) par l'arrière de l'ensemble propulsif, c'est-à-dire par l'extrémité arrière de la partie principale P2.

La figure 2 représente une partie antérieure P1 d'un ensemble propulsif selon une configuration classique, conforme à l'état de la technique. Selon cette configuration, la lèvre d'entrée d'air comporte un cadre avant 2 qui est disposé à l'arrière de ladite lèvre d'entrée d'air 1. Une structure interne comportant un panneau acoustique 3, prolonge vers l'arrière la surface intérieure 11 de la lèvre d'entrée d'air 1. Le panneau acoustique 3 a pour fonction de limiter les émissions acoustiques du groupe propulsif par absorption des ondes acoustiques générées notamment par le moteur et la soufflante. Les ondes acoustiques qui viennent impacter la surface résistive 31 (vis-à-vis de la nacelle) généralement perforée dudit panneau acoustique sont absorbées sur une plage de fréquence qui dépend de la constitution du panneau acoustique 3. Le panneau acoustique a également une fonction structurelle, de transmission d'efforts mécaniques, expliquée ci-après.

La manière dont est réalisée la liaison entre la lèvre d'entrée d'air 1 et le panneau acoustique 3 est conditionnée par de nombreuses contraintes de conception. Notamment, cette liaison doit permettre une transmission des efforts entre la lèvre d'entrée d'air et le panneau acoustique 3, afin au final que ces efforts soient transmis à une bride de jonction 5 permettant la liaison de la partie antérieure P1 de la nacelle à un élément structurel de la partie principale P2 de la nacelle. Par ailleurs, la lèvre d'entrée d'air comporte généralement des dispositifs thermiques permettant d'en assurer le dégivrage. Ces dispositifs comportent par exemple une dérivation de gaz chauds issus du moteur que contient la nacelle à destination de l'intérieur de la lèvre d'entrée d'air 1. La transmission thermique vers le panneau acoustique 3, qui se produit essentiellement par rayonnement, doit être limitée autant que possible. Enfin, il est important de garantir une bonne continuité de surface entre la surface intérieure 11 de la lèvre d'entrée d'air 1 et la surface résistive 31 du panneau acoustique 3.

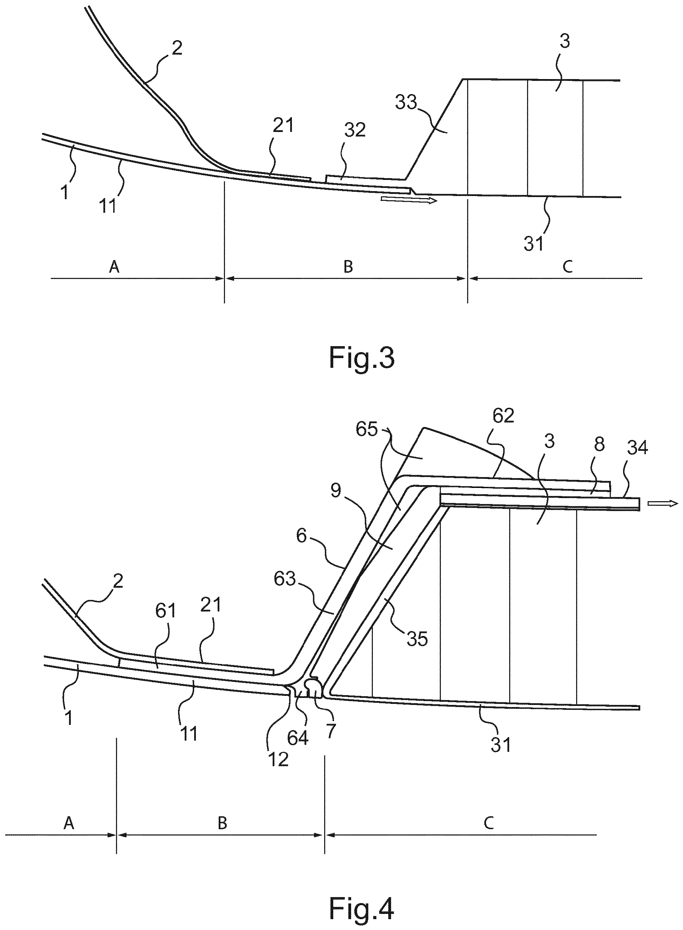

Il résulte de ces contraintes de conception que la jonction entre la lèvre d'entrée d'air 1 et le panneau acoustique 3 est réalisée par exemple comme représenté en détail à la figure 3. Dans cette configuration de jonction, le cadre avant 2 est lié à la paroi interne de la lèvre d'entrée d'air 1 (qui forme la surface intérieure 11) en une zone de contact située au niveau d'un pied 21 dudit cadre avant 2. Le panneau acoustique 3 est quant à lui lié à la paroi interne de la lèvre d'entrée d'air en arrière dudit pied 21 du cadre avant 2. En particulier, le panneau acoustique 3 est lié à la paroi interne de la lèvre d'entrée d'air 1 en une zone de contact située en arrière de la zone de contact entre le pied 21 du cadre avant 2 et la lèvre d'entrée d'air 1.

Afin d'assurer la continuité de surface entre la surface intérieure 11 de la lèvre d'entrée d'air 1 et la surface résistive 31 du panneau acoustique 3, la liaison entre la lèvre d'entrée d'air 1 et le panneau acoustique 3 est assurée par éclissage d'une couronne avant 32 du panneau acoustique sur la paroi interne de la lèvre d'entrée d'air. Le procédé de fabrication du panneau acoustique 3 (notamment pour le dépôt de la peau arrière sur le panneau), la conformation géométrique de l'ensemble, ainsi que dans une moindre mesure la nécessité de répartir les efforts mécaniques dans le panneau acoustique 3 impliquent que ledit panneau acoustique 3 comporte une zone avant pleine 33, qui est avantageusement de section longitudinale triangulaire.

Dans l'art antérieur, les efforts mécaniques provenant de la lèvre d'entrée d'air 1 sont ainsi principalement transmis au panneau acoustique 3 au niveau de la surface intérieure 11 de la lèvre d'entrée d'air 1 vers la surface résistive 31 du panneau acoustique 3. La voie principale de transmission des efforts est représentée à la figure 3, à titre d'illustration, par une flèche large.

Il résulte de cette configuration de jonction, et plus généralement de toutes les configurations connues dans l'état de la technique, que le traitement acoustique à l'intérieur de la nacelle s'arrête, longitudinalement, au niveau de la zone avant pleine 33 qui n'a aucune propriété acoustique. Il en résulte trois zones à l'avant de la nacelle :
- une zone A de dégivrage en avant du pied 21 du cadre avant 2 dans laquelle le dégivrage est assuré,
- une zone B de jonction qui n'a ni propriété acoustique ni fonction de dégivrage et qui comprend dans l'exemple représenté la zone de contact entre le pied 21 du cadre avant 2 et la lèvre d'entrée d'air 1, la couronne avant 32 du panneau acoustique sur la paroi interne de la lèvre d'entrée d'air, et la zone avant pleine 33 du panneau acoustique 3, et
- une zone C de traitement acoustique correspondant à la surface résistive 31 du panneau acoustique 3.

L'objectif de l'invention est d'agrandir autant que possible la zone C de traitement acoustique vers l'avant de la nacelle, en particulier en limitant la longueur de la zone B de jonction.

Ainsi, l'invention porte sur une partie antérieure de nacelle de groupe propulsif d'aéronef, comportant une lèvre d'entrée d'air disposée à une extrémité avant de ladite partie antérieure un panneau acoustique et une liaison rigide entre le panneau acoustique et la lèvre d'entrée d'air. La partie antérieure de nacelle est configurée de sorte qu'une surface résistive du panneau acoustique prolonge une surface intérieure de la lèvre d'entrée d'air. Le panneau acoustique présente une épaisseur délimitée entre sa surface résistive et une peau arrière, et ladite liaison est formée entre la lèvre d'entrée d'air et ladite peau arrière du panneau acoustique de sorte à former une voie principale de propagation d'efforts entre ladite lèvre d'entrée d'air et ladite peau arrière.

En créant une voie d'effort privilégiée entre la lèvre d'entrée d'air et la peau arrière du panneau acoustique, l'invention permet de changer la configuration de la liaison entre ces éléments, ce qui supprime certaines contraintes de conception, notamment dans la partie avant du panneau acoustique. Cela permet au final l'adoption d'un panneau acoustique présentant des propriétés acoustiques jusqu'à son extrémité avant, qui peut être approchée du cadre avant de la lèvre d'entrée d'air, voire liée audit cadre avant.

Selon un mode de réalisation, la liaison rigide entre le panneau acoustique et la lèvre d'entrée d'air comporte une pièce intermédiaire dont la section présente une première branche de liaison sur la lèvre d'entrée d'air, une deuxième branche de liaison sur la peau arrière du panneau acoustique, et une troisième branche liant rigidement la première branche à la deuxième branche. La pièce intermédiaire peut être une pièce annulaire, constituée de manière monobloc ou par assemblage de plusieurs portions. La pièce intermédiaire peut comporter des nervures de rigidification. La pièce intermédiaire peut comporter une surépaisseur intercalée entre un bord arrière de la lèvre d'entrée d'air et une extrémité avant de la surface résistive du panneau acoustique.

Selon un autre mode de réalisation, la lèvre d'entrée d'air comporte une extrémité arrière comportant une paroi prolongeant la surface intérieure en direction de la peau arrière. Ladite paroi prolongeant la surface intérieure peut être prolongée par une surface annulaire liée à la peau arrière du panneau acoustique de sorte à former la liaison rigide entre la lèvre d'entrée d'air et la peau arrière. Alternativement, la paroi de prolongation prolongeant la surface intérieure peut être fixée à une paroi avant du panneau acoustique, ladite paroi avant étant conformée pour être en contact avec la peau arrière du panneau acoustique et fixée à ladite peau arrière, de sorte que la liaison rigide entre la lèvre d'entrée d'air et la peau arrière comprend la paroi avant.

La lèvre d'entrée d'air peut comporter un cadre avant comportant un pied lié à une surface interne de la lèvre d'entrée d'air à proximité immédiate d'une extrémité avant du panneau acoustique.

L'invention porte également sur un groupe propulsif d'aéronef comportant une nacelle comportant une partie avant et une partie principale, ladite partie avant étant telle que précédemment décrite. L'invention porte enfin sur un aéronef comportant un tel groupe propulsif.

D'autres particularités et avantages de l'invention apparaîtront encore dans la description ci-après.

Aux dessins annexés, donnés à titre d'exemples non limitatifs :
- la figure 1a représente selon une vue schématique en trois dimensions un ensemble propulsif d'aéronef ;
- la figure 1b représente un aéronef selon une vue schématique en trois dimensions;
- la figure 2 représente selon une vue partielle de principe en coupe une partie antérieure d'une nacelle d'ensemble propulsif d'aéronef conforme à l'art antérieur;
- la figure 3 représente selon une vue schématique en coupe longitudinale la jonction, telle que réalisée dans l'art antérieur, entre une entrée d'air et un panneau acoustique dans une partie antérieure d'une nacelle d'ensemble propulsif d'aéronef ;
- la figure 4 représente, selon une vue analogue à celle de la figure 3, la jonction entre une entrée d'air et un panneau acoustique conforme à un mode de réalisation de l'invention ;
- la figure 5 représente, selon une vue analogue à celle des figures 3 et 4, la jonction entre une lèvre d'entrée d'air et un panneau acoustique conforme à un deuxième mode de réalisation de l'invention ;
- la figure 6 représente, selon une vue analogue à celle des figures 3 à 5, la jonction entre une lèvre d'entrée d'air et un panneau acoustique conforme à un troisième mode de réalisation de l'invention ;
- la figure 7 représente, selon une vue analogue à celle des figures 3 à 6, la jonction entre une lèvre d'entrée d'air et un panneau acoustique conforme à une variante de l'invention.
- la figure 8 représente, selon une vue partielle de principe en coupe une partie antérieure d'une nacelle d'ensemble propulsif d'aéronef conforme à un mode de réalisation alternatif à ceux des figures 4 à 7;
- la figure 9 représente, selon une vue analogue à celle de la figure 8, une variante du mode de réalisation de la figure 8.

Les figures 1a à 3, présentant respectivement des généralités sur les ensembles propulsifs d'aéronef et une configuration de partie antérieure de nacelle conforme à l'état de la technique ont été décrites ci-avant en préambule du présent document.

La figure 4 représente le détail de la jonction entre une lèvre d'entrée d'air 1, en particulier au niveau de sa surface intérieure 11, et un panneau acoustique 3, selon un mode de réalisation de l'invention. Tout comme dans l'état de la technique, la surface résistive 31 du panneau acoustique 3 doit être dans le prolongement de la surface intérieure 11, et une liaison rigide doit être formée entre la lèvre d'entrée d'air 1 et le panneau acoustique 3, de sorte à transmettre les efforts issus de la lèvre d'entrée d'air 1 vers une bride de jonction 5 (non représenté à la figure 4) permettant la jonction de la partie antérieure de nacelle P1 avec une partie principale P2.

La liaison entre la lèvre d'entrée d'air 1 et le panneau acoustique 3 est réalisée dans le mode de réalisation représenté à l'aide d'une pièce intermédiaire 6. La pièce intermédiaire 6 est une pièce rigide qui est liée d'une part à la lèvre d'entrée d'air 1 au niveau de sa paroi formant la surface intérieure 11, et d'autre part à la peau arrière 34 du panneau acoustique 3. En particulier, la pièce intermédiaire 6, vue en section dans un plan passant par l'axe longitudinal L de la nacelle, comporte une première branche 61 qui est liée à la lèvre d'entrée d'air 1. La pièce intermédiaire 6 comporte une deuxième branche 62 qui est liée à la peau arrière 34 du panneau acoustique 3. Enfin, la pièce intermédiaire 6 comporte une troisième branche 63 qui relie rigidement la première branche 61 à la deuxième branche 62.

La première branche 61 permet un contact surfacique entre la pièce intermédiaire 6 et la lèvre d'entrée d'air 1. La deuxième branche 62 permet un contact surfacique entre la pièce intermédiaire 6 et la peau arrière 34.

Bien que l'on parle de « branches » vues en section, les différentes branches de la pièce intermédiaire correspondent en fait à des couronnes, dans la mesure où la pièce intermédiaire est généralement annulaire, conformément à la géométrie tridimensionnelle de la partie antérieure de nacelle. Ainsi, la pièce intermédiaire peut être réalisée de manière monobloc ou par assemblage, notamment par éclissage, de plusieurs portions. Pour constituer une pièce annulaire, les portions peuvent par exemple être sensiblement en arc de cercle (de courbure fixe ou variable).

La pièce intermédiaire 6 peut comporter des nervures 65, afin d'améliorer sa rigidité et sa résistance. Dans le cas d'une pièce intermédiaire 6 annulaires les nervures 65 sont réparties, de préférence de manière régulière, à périphérie de ladite pièce intermédiaire 6.

Dans l'exemple ici représenté, la liaison entre la pièce intermédiaire 6 et la lèvre d'entrée d'air 1 est directe, et peut être réalisée par divers moyens connus, par exemple par rivetage, vissage, ou collage.

La liaison entre la pièce intermédiaire 6 et la peau arrière 34 met en œuvre un élément d'ajustement 8 permettant un ajustage mécanique entre la pièce intermédiaire 6 et la peau arrière 34. Par exemple l'élément d'ajustement 8 peut être formé d'une couronne en matériau composite.

La liaison entre la pièce intermédiaire 6 et la peau arrière 34 peut être réalisée par divers moyens connus, par exemple par rivetage, vissage, ou collage, et en particulier par des rivets aveugles.

Afin d'assurer une continuité de surface entre la surface intérieure 11 de la lèvre d'entrée d'air 1 et la surface résistive 31, la pièce intermédiaire comporte dans l'exemple représenté une surépaisseur 64 intercalée entre un bord arrière 12 de la lèvre d'entrée d'air 1 et une extrémité avant de la surface résistive 31 du panneau acoustique 3. La surépaisseur 64 est configurée pour rattraper le niveau entre la première branche 61 et assurer une continuité entre la surface intérieure 11 et la surface résistive 31. Un joint 7 peut être interposé entre la surépaisseur 64 et le panneau acoustique 3, afin de garantir une étanchéité aux fluides, notamment à l'air.

La liaison ainsi mise en œuvre crée une voie principale de transmission des efforts entre la lèvre d'entrée d'air 1 et le panneau acoustique 3 au niveau de sa peau arrière. Cette voie principale de transmission des efforts est représentée à la figure 4, à titre d'illustration, par une flèche large.

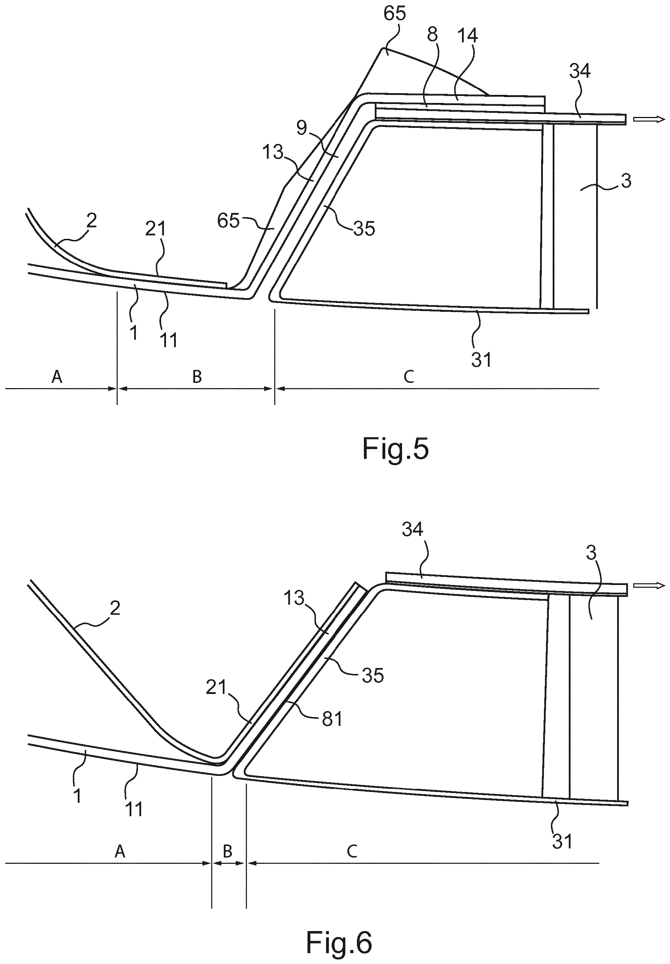

La liaison ainsi mise en œuvre entre la lèvre d'entrée d'air 1 et le panneau acoustique 3 au niveau de sa peau arrière 34, permet de mettre en œuvre un panneau acoustique ayant des propriétés acoustiques (d'absorption des ondes acoustiques) jusqu'à son extrémité avant qui est formée par une paroi avant 35. En effet, la zone avant pleine du panneau acoustique n'est plus nécessaire, car d'une part la peau arrière 35 n'a pas besoin d'être déposée sur la zone avant, triangulaire en section longitudinale, du panneau acoustique 3, et d'autre part car les efforts subis par la lèvre d'entrée d'air sont transmis majoritairement à la peau arrière 34. Ainsi, au lieu de présenter une zone avant pleine comme dans l'état de la technique, qui n'a pas de fonction acoustique, le panneau acoustique 3 peut présenter dans sa zone avant une forme creuse ou alvéolaire, ou toute autre constitution permettant l'absorption des ondes acoustiques. Par exemple, la figure 4 présente une structure alvéolaire poursuivie jusqu'à l'extrémité avant du panneau acoustique, tandis que les figures 5 et 6 représentent une structure creuse à l'extrémité avant du panneau acoustique. Les façons d'assurer que le panneau acoustique conserve des propriétés acoustiques jusqu'à son extrémité avant sont interchangeables entre les différents modes de réalisation de l'invention.

En particulier, la surface résistive 31 du panneau acoustique 3 peut être perforée jusqu'à l'extrémité avant du panneau acoustique 3. Cela permet d'étendre vers l'avant de la nacelle la zone C de traitement acoustique. La longueur (selon la direction longitudinale de la nacelle) de la zone B de jonction est corolairement réduite.

Dans l'exemple de mode de réalisation représenté à la figure 4, la lèvre d'entrée d'air de la partie antérieure de nacelle comporte un cadre avant 2. Le cadre avant 2 comporte un pied 21, qui peut ainsi être lié à la lèvre d'entrée d'air 1 à proximité immédiate de l'extrémité avant du panneau acoustique. Pour cela, dans le mode de réalisation de la figure 4, le pied 21 du cadre avant 2 est lié à la première branche 61 de la pièce intermédiaire 6, ladite première branche 61 étant liée pour sa part à la lèvre d'entrée d'air 1.

La pièce intermédiaire 6, outre sa fonction de liaison mécanique pour créer une voie principale de transmission des efforts vers la peau arrière 34, peut avoir une fonction d'isolation thermique entre la lèvre d'entrée d'air et le panneau acoustique. En effet, la fonction de dégivrage assurée dans la lèvre d'entrée d'air, en particulier en amont du cadre avant 2, peut entraîner la circulation d'air à environ 200°C dans la lèvre d'entrée d'air. Il est préférable de limiter la transmission de chaleur en arrière de la lèvre d'entrée d'air 1, notamment vers le panneau acoustique 3. Ainsi, la pièce intermédiaire peut être constituée d'un matériau isolant thermique ou comporter un revêtement de surface isolant thermique. En outre, une grande partie de la transmission de chaleur se faisant par rayonnement, une lame d'air 9 ménagée entre la pièce intermédiaire 63 (en l'occurrence la troisième branche 63 de la pièce intermédiaire) et la paroi avant 35 permet de limiter cette transmission de chaleur. La lame d'air 9 peut être remplacée par une lame d'un autre gaz ou une lame de vide afin de maximiser sa fonction d'isolation thermique.

La figure 5 illustre un deuxième mode de réalisation d'une partie antérieure de nacelle conforme à l'invention. La figure 5 représente plus particulièrement, tout comme la figure 4, la jonction entre la lèvre d'entrée d'air 1 et le panneau acoustique 3 de la partie antérieure de nacelle.

Ce deuxième mode de réalisation diffère essentiellement de celui représenté à la figure 4 en ce qu'il ne comporte pas de pièce intermédiaire 6. Pour les autres éléments, on peut donc se référer à la description réalisée ci-dessus du mode de réalisation de la figure 4.

Néanmoins, dans le mode de réalisation de la figure 5, tout comme dans celui de la figure 6 décrite ci-après, la paroi avant 35 est conformée, et en particulier recourbée, de sorte à être en contact et fixée dans cette zone de contact à la peau arrière 34. En outre, la lèvre d'entrée d'air 1 comporte une extrémité arrière comportant une paroi de prolongation 13 prolongeant la surface intérieure 11 en direction de la peau arrière 34 du panneau acoustique 3.

Dans le mode de réalisation de la figure 5, la paroi de prolongation 13 s'étend sensiblement parallèlement à la paroi avant 35 du panneau acoustique. Dans ce deuxième mode de réalisation, la paroi de prolongation 13 est poursuivie pour former en outre une surface annulaire 14, qui est superposée et liée à la peau arrière 34 (directement ou avec un élément d'ajustement 8 tel que précédemment décrit).

Ainsi, comparativement au mode de réalisation de la figure 4, la fonction de la deuxième branche et de la troisième branche de la pièce intermédiaire sont ici remplies par la paroi de prolongation. En particulier, la surface annulaire 14 remplace fonctionnellement la deuxième branche 62. Néanmoins, tout comme dans le mode de réalisation de la figure 4, la liaison mise en œuvre crée une voie principale de transmission des efforts (représentée par une flèche large) entre la lèvre d'entrée d'air 1 et le panneau acoustique 3 au niveau de sa peau arrière 34.

Un espace ou une lame d'air 9 peut être ménagée entre la paroi de prolongation 13 et la paroi avant 35 du panneau acoustique 3. Cela améliore l'isolation thermique entre la lèvre d'entrée d'air 1 et le panneau acoustique 3. Bien évidemment, un joint 7 (non représenté à la figure 5) peut être interposé entre lèvre d'entrée d'air 1 et le panneau acoustique 3, avantageusement de sorte à assurer une continuité entre la surface intérieure 11 et la surface résistive 31.

La figure 6 illustre un troisième mode de réalisation d'une partie antérieure d'aéronef conforme à l'invention, permettant la création d'une voie principale de transmission des efforts (représentée par une flèche large) entre la lèvre d'entrée d'air 1 et le panneau acoustique 3 au niveau de sa peau arrière 34. La figure 6 représente plus particulièrement, tout comme les figures 4 et 5, la jonction entre la lèvre d'entrée d'air 1 et le panneau acoustique 3 de la partie antérieure de nacelle

Dans ce troisième mode de réalisation de l'invention, comparativement au deuxième mode représenté à la figure 5, la paroi de prolongation 13 de la lèvre d'entrée d'air 1 est fixée à la paroi avant 35 du panneau acoustique 3. La liaison entre ladite lèvre d'entrée d'air 1 et la peau arrière 34 est alors réalisée via la paroi avant 35 qui est conformée, et en particulier recourbée, de sorte à être en contact et fixée dans cette zone de contact à la peau arrière 34.

Dans ce troisième mode de réalisation, le contact entre la paroi de prolongation 13 et la paroi avant 35 peut favoriser la transmission thermique par conduction, mais, d'une part une couche isolante 81 (ou un revêtement isolant) peut être interposée, et d'autre part, l'isolation obtenue peut être satisfaisante car l'essentiel de la transmission thermique entre la lèvre d'entrée d'air 1 et le panneau acoustique 3 se fait par rayonnement.

La figure 6 présente une configuration du cadre avant 2 qui est particulièrement avantageuse dans ce troisième mode de réalisation, mais qui pourrait être mise en œuvre dans tous les modes de réalisation de l'invention, afin de limiter fortement la longueur de la zone B de jonction, et ainsi permettre de maximiser la zone C de traitement acoustique (et/ou la zone A de dégivrage). Dans cette configuration, le cadre avant est lié par son pied 21 à la paroi de prolongation 13 de la lèvre d'entrée d'air 1. Ainsi, toutes les liaisons entre la lèvre d'entrée d'air 1 et le panneau acoustique 3 sont réalisées au niveau de la paroi avant 35 du panneau acoustique, ce qui permet de n'employer aucune portion de la surface interne 11 de la nacelle à la réalisation de ces liaisons.

Alternativement, la liaison entre la lèvre d'entrée d'air et le panneau acoustique peut être réalisée entre le cadre avant 2 de la lèvre d'entrée d'air et le panneau acoustique uniquement, au niveau de sa paroi avant 35, une portion dudit cadre avant 2 s'étendant en arrière de son pied 21 de liaison le liant à la paroi interne 11 de la nacelle.

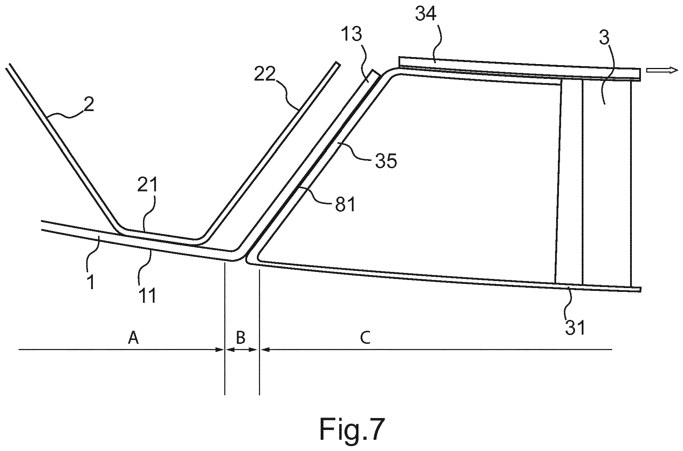

La figure 7 représente une variante conforme à l'invention, de la jonction entre une entrée d'air 1 et un panneau acoustique 3. Cette variante est illustrée sur le fondement du mode de réalisation de la figure 6, mais elle est applicable à l'ensemble des modes de réalisation de l'invention. Selon cette variante, le pied 21 du cadre avant 2 est lié à la paroi interne de la lèvre d'entrée d'air 1, et est prolongé par une paroi extrémale de cadre avant 22. La paroi extrémale de cadre avant 22 s'étend en regard de la paroi de prolongation 13, à distance de cette dernière. La paroi extrémale de cadre avant 22 offre une protection thermique contre le rayonnement à la jonction entre l'entrée d'air 1 et le panneau acoustique 3.

Cette fonction peut être obtenue alternativement par une pièce rapportée attachée à la lèvre d'entrée d'air.

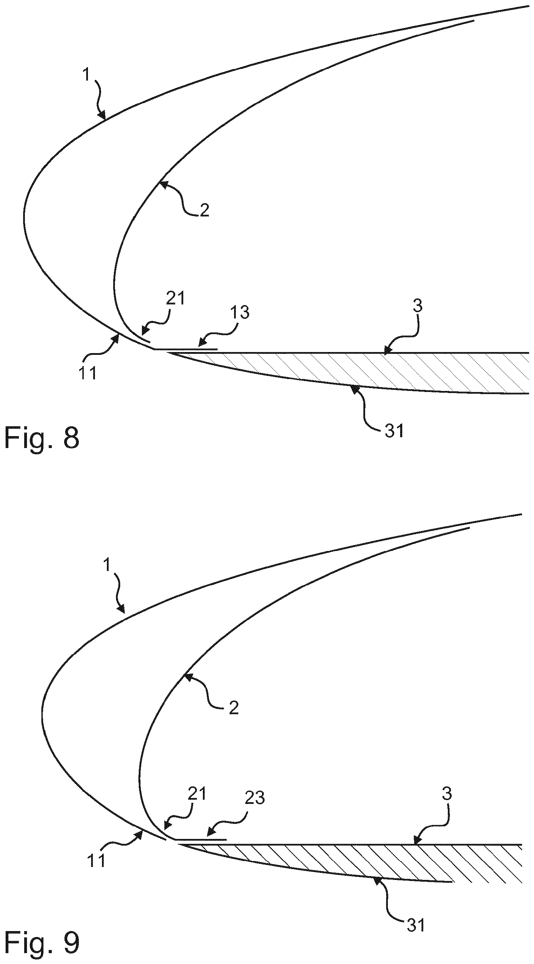

Les figures 8 et 9 représentent deux variantes d'un mode de réalisation de l'invention dans lequel le panneau acoustique 3 présente une conformation particulière facilitant la liaison entre la lèvre d'entrée d'air et ledit panneau acoustique qui est réalisée au niveau de la peau arrière 34 du panneau acoustique 3.

Dans la variante représentée à la figure 8, la liaison entre la lèvre d'entrée d'air 1 et la peau arrière 34 est réalisée au niveau d'une paroi de prolongation 13 prolongeant la surface intérieure 11 sur ladite peau arrière 34.

Dans la variante représentée à la figure 9, une portion d'extension 23 du cadre avant 2 s'étend sur ladite peau arrière à laquelle elle est liée, en arrière de son pied 21 qui est lié à la paroi interne 11 de la nacelle.

Dans ces deux variantes, la liaison peut être réalisée directement, à la présence optionnelle près d'un élément d'ajustement intercalaire, ou via une pièce intermédiaire pouvant être configurée notamment pour assurer une continuité entre la surface intérieure 11 et la surface résistive 31, par exemple grâce à une surépaisseur de la pièce intermédiaire.

La partie antérieure de nacelle d'ensemble propulsif d'aéronef ainsi développée dans l'invention permet, par une configuration de liaison optimisée entre la lèvre d'entrée d'air et le panneau acoustique, de maximiser la zone de traitement acoustique à l'intérieur de la nacelle, en prolongeant cette zone vers l'avant de la nacelle. La configuration proposée dans l'invention permet également de créer, à l'extrémité antérieure du panneau acoustique, une voie de transmission des efforts vers la peau arrière du panneau acoustique. Cela est avantageux en ce que les efforts sont ainsi appliqués au moins en partie dans un élément structurel situé au même niveau (c'est-à-dire à la même distance de l'axe longitudinal de la nacelle) que la bride de jonction faisant la jonction, au niveau de l'extrémité postérieure du panneau acoustique, entre la partie antérieure de la nacelle et sa partie principale L'invention permet de conserver un niveau d'isolation thermique satisfaisant entre la lèvre d'entrée d'air et le panneau acoustique de la nacelle.

## Revendications

1. Partie antérieure (P1) de nacelle de groupe propulsif d'aéronef, comportant
- une lèvre d'entrée d'air (1) disposée à une extrémité avant de ladite partie antérieure (P1),
- un panneau acoustique (3), et
- une liaison rigide entre le panneau acoustique (3) et la lèvre d'entrée d'air (1),
ladite partie antérieure de nacelle étant configurée de sorte qu'une surface résistive (31) du panneau acoustique (3) prolonge une surface intérieure (11) de la lèvre d'entrée d'air (1), et **caractérisée en ce que**, le panneau acoustique présentant une épaisseur délimitée entre sa surface résistive (31) et une peau arrière (34), ladite liaison est formée entre la lèvre d'entrée d'air (1) et ladite peau arrière (34) du panneau acoustique (3) de sorte à former une voie principale de propagation d'efforts entre ladite lèvre d'entrée d'air (1) et ladite peau arrière (34).

2. Partie antérieure (P1) de nacelle selon la revendication 1, dans laquelle la liaison rigide entre le panneau acoustique (3) et la lèvre d'entrée d'air (1) comporte une pièce intermédiaire (6) dont la section présente une première branche (61) de liaison sur la lèvre d'entrée d'air (1), une deuxième branche (62) de liaison sur la peau arrière (34) du panneau acoustique (3), et une troisième branche (63) liant rigidement la première branche (61) à la deuxième branche (62).

3. Partie antérieure (P1) de nacelle selon la revendication 2, dans laquelle la pièce intermédiaire (6) est une pièce annulaire, constituée de manière monobloc ou par assemblage de plusieurs portions.

4. Partie antérieure (P1) de nacelle selon la revendication 2 ou la revendication 3, dans laquelle la pièce intermédiaire (6) comporte des nervures (65) de rigidification.

5. Partie antérieure (P1) de nacelle selon l'une des revendications 2 à 4, dans laquelle la pièce intermédiaire (6) comporte une surépaisseur (64) intercalée entre un bord arrière (12) de la lèvre d'entrée d'air (1) et une extrémité avant de la surface résistive (31) du panneau acoustique (3).

6. Partie antérieure (P1) de nacelle selon la revendication 1, dans laquelle la lèvre d'entrée d'air (1) comporte une extrémité arrière comportant une paroi de prolongation (13) prolongeant la surface intérieure (11) en direction de la peau arrière (34).

7. Partie antérieure (P1) de nacelle selon la revendication 6, dans laquelle ladite paroi de prolongation (13) prolongeant la surface intérieure (11) est prolongée par une surface annulaire (14) liée à la peau arrière (34) du panneau acoustique (3) de sorte à former la liaison rigide entre la lèvre d'entrée d'air (1) et la peau arrière (34).

8. Partie antérieure (P1) de nacelle selon la revendication 6, dans laquelle la paroi de prolongation (13) prolongeant la surface intérieure (11) est fixée à une paroi avant (35) du panneau acoustique (3), ladite paroi avant (35) étant conformée pour être en contact avec la peau arrière (34) du panneau acoustique et fixée à ladite peau arrière, de sorte que la liaison rigide entre la lèvre d'entrée d'air (1) et la peau arrière (34) comprend la paroi avant (35).

9. Partie antérieure (P1) de nacelle selon l'une des revendications précédentes dont la lèvre d'entrée d'air comporte un cadre avant (2) comportant un pied (21) lié à une surface interne de la lèvre d'entrée d'air (1) à proximité immédiate d'une extrémité avant du panneau acoustique (3).

10. Groupe propulsif d'aéronef comportant une nacelle comportant une partie avant (P1) et une partie principale (P2), ladite partie avant (P1) étant conforme à l'une des revendications précédentes.

11. Aéronef comportant un groupe propulsif selon la revendication 10.
